Europäisches Patentamt

European Patent Office

Office européen des brevets

(19)

(11) Veröffentlichungsnummer : **0 012 854**
**B1**

(12)

# EUROPÄISCHE PATENTSCHRIFT

(45) Veröffentlichungstag der Patentschrift :
11.08.82

(21) Anmeldenummer : 79104661.8

(22) Anmeldetag : 23.11.79

(51) Int. Cl.³ : **B 27 G 19/02**

(54) **Schutzvorrichtung für das Kreissägeblatt von Kippkreissägemaschinen.**

(30) Priorität : 23.12.78 DE 2856038

(43) Veröffentlichungstag der Anmeldung :
09.07.80 (Patentblatt 80/14)

(45) Bekanntmachung des Hinweises auf die Patenterteilung : 11.08.82 Patentblatt 82/32

(84) Benannte Vertragsstaaten :
AT CH DE LU NL SE

(56) Entgegenhaltungen :
FR A 2 086 833
FR A 2 312 327

(73) Patentinhaber : **Chr. Eisele Maschinenfabrik GmbH & Co. KG.**
**Nürtinger Strasse 9 - 15**
**D-7316 Köngen (DE)**

(72) Erfinder : **Drixler, Karl**
**In-den-Hofwiesen 37/1**
**D-7440 Nürtingen-Neckarhausen (DE)**

(74) Vertreter : **Patentanwaltskanzlei Höger, Stellrecht & Partner**
**Uhlandstrasse 14c**
**D-7000 Stuttgart 1 (DE)**

EP 0 012 854 B1

## Schutzvorrichtung für das Kreissägeblatt von Kippkreissägemaschinen

Die Erfindung betrifft eine Schutzvorrichtung für das Kreissägeblatt von Kippkreissägemaschinen mit den konstruktiven Merkmalen des Oberbegriffes von Anspruch 1.

Schutzvorrichtungen dieser Art sind bei Kippkreissägemaschinen bekannt.

Das eine Teilstück dieser Vorrichtungen bildet hierbei eine am Sägeaggregat zu befestigende, das Kreissägeblatt zum Teil in sich aufnehmende Haube, die an beiden Stirnseiten das letztere ungefähr bis zur Hälfte übergreift.

Das andere Teilstück schirmt den restlichen Teil der zugänglichen Stirnseite des Kreissägeblattes sowie dessen an der Bedienungsseite vorhandenen Umfangsteil ab, indem es diesen umgreift. Um dabei im Arbeitsbereich des Kreissägeblattes gute Sichtmöglichkeiten zu schaffen, besteht dieses Vorrichtungsteilstück aus durchsichtigem Kunststoff. Außerdem ist es relativ zur Haube in der Höhe verstellbar, indem es um eine Achse verschwenkbar angeordnet ist, um bei Kippen des Sägeaggregates sicherzustellen, daß dieses Teilstück bei Durchführung des Sägevorschubes zur Schnittstelle stets in der gleichen Lage verbleibt.

Damit gewährleistet diese Schutzvorrichtung sowohl an der frei zugänglichen Stirnseite des Kreissägeblattes als auch an der Bedienungsseite einen wirksamen Berührungsschutz.

Auf der Seite des Sägeaggregates hingegen ist das am letzteren nach unten vorstehende Teilstück des Kreissägeblattes frei zugänglich, weshalb diese Bauart den neuen geltenden Prüfgrundsätzen für Be- und Verarbeitungsmaschinen nicht mehr gerecht wird, die unter anderem vorschreiben, daß in der Ruhestellung des Kreissägeblattes ein Hineingreifen in den schneidenden Teil nicht mehr möglich sein darf bzw. in der Arbeitsstellung nur der zum Schneiden benutzte Teil des Sägeblattes freigegeben wird.

Bei einer Pendel-Kreissäge mit einem um zwei Gelenkachsen schwingend aufgehängten Maschinenträger (FR-A 23 12 327) ist es bekannt, außer einer an der Bedienungsseite der Kreissäge vorgesehenen, ortsfesten Abschirmung insgesamt noch drei weitere Abdeckteile vorzusehen, nämlich eine mit dem Maschinenträger starr verbundene Haube, ein an der ortsfesten Abschirmung schwenkbar gelagertes Gehäuseteil, welches über einen Stellhebel mit der Haube verbunden ist, und eine ebenfalls in der ortsfesten Abschirmung schwenkbar gelagerte Seitenabschirmung. Diese vierteilige Anordnung ist in ihrer Herstellung aufwendig und verhältnismäßig störanfällig. Außerdem verschwenkt sich die erwähnte Haube im Betrieb bezüglich der Werkstückauflagefläche relativ weit nach oben, was einen erheblichen Platzbedarf bedingt.

Die der Erfindung zugrundeliegende Aufgabe besteht deshalb in einer Weiterbildung einer Schutzvorrichtung gemäß dem Oberbegriff von Anspruch 1, die den Forderungen der neuen Prüfbestimmungen gerecht wird.

Diese Aufgabe wird durch die kennzeichnenden Merkmale des Anspruches 1 gelöst.

Bei einer in dieser Weise ausgebildeten Schutzvorrichtung ist somit das Kreissägeblatt zumindest im Umfangsbereich und seitlich soweit abgedeckt, daß in der Ausgangsstellung des Sägeaggregates ein unbeabsichtigtes Hineingreifen in den schneidenden Teil nicht mehr möglich ist.

Die der Haube zugeordnete Steuervorrichtung gewährleistet dabei, daß in jeder Phase des Sägevorschubes trotz der Schwenkbewegung des Sägeaggregates die Haube in der vertikalen Ebene ihre Lage im wesentlichen beibehält. Dadurch wird erreicht, daß die Haube sich zwar, aufgrund der Schwenkbewegung des Sägeaggregates, relativ zur Schnittstelle in der Richtung, in der sich der Sägeschlitz erstreckt, verlagern kann, daß dabei aber während des Sägens weder ein Kollidieren mit der Werkspannvorrichtung oder dem Werkstück noch eine solche Verlagerung möglich ist, daß das Kreissägeblatt von einer oder von beiden Stirnseiten aus im Umfangsbereich, von der Bedienungsseite oder von der dieser gegenüberliegenden Seite aus zugänglich wird.

Eine weitere vorteilhafte Ausgestaltung der Erfindung ist Gegenstand des Anspruches 2. Durch diese Maßnahme ist sichergestellt, daß der bewegliche Teil der Schutzvorrichtung zumindest in der Ruhestellung, derart arretiert ist, daß er gegen unbeabsichtigtes Anheben gesichert ist und das Sägeblatt nur beim Bewegen des Sägeaggregates in Arbeitsstellung freigegeben wird.

Zweckmäßig ist es hierbei, gemäß Anspruch 3 die Haube in der Schwenkausgangsstellung des Sägeaggregates durch die Steuervorrichtung zu verriegeln, so daß auf zusätzliche Hilfsmittel verzichtet werden kann.

Das durch die Haube gebildete verstellbare Teilstück der Schutzvorrichtung kann relativ zum Sägeaggregat vertikal verstellbar oder um eine Schwenkachse verschwenkbar vorgesehen sein. In jedem Falle ist es vorteilhaft, die Steuervorrichtung nach Anspruch 4 zu gestalten, wobei das gemäß dieses Anspruches vorgesehene und mit einer Steuerkurve zusammenwirkende Abtastglied gemäß Anspruch 5 auch zum Verriegeln der Haube in der Schwenkausgangsstellung des Sägeaggregates verwendet werden kann, indem dieses in eine entsprechende Ausnehmung der Steuerkurve eingreift.

Eine weitere Verbesserung sieht gemäß Anspruch 6 vor, in dem die Haube in ihrer Freigabestellung feststellbar ist und bei Verschwenken des Sägeaggregates selbsttätig in ihre Abdeckstellung zurückkehrt. In einfacher Weise läßt sich diese Entriegelung der Haube gemäß Anspruch 7 dadurch bewerkstelligen, daß sie mittels eines am Handhebel des Sägeaggregates aus einer Anschlagstellung in eine Freigabestellung verstellbar angeordneten Anschlaggliedes in ihrer Freigabestellung feststellbar ist, welches Anschlagglied bei Verschwenken des Sägeaggregates die Haube dann zwangsläufig frei gibt.

Sofern es sich um eine Kippkreissägemaschine handelt, deren Sägeaggregat am Maschinengestell derart verschwenkbar ist, daß das Kreissägeblatt bei seiner Bewegung zwischen beiden Schwenkendstellungen an eine Werkstückspannvorrichtung im wesentlichen von hinten her herangeführt wird, so ergibt sich eine günstige Konstruktion nach Anspruch 9. Ist hingegen das Schwenkaggregat bei seiner Schwenkbewegung in Richtung Werkstück entlang eines sich von oben nach unten erstreckenden Kreisbogenstückes bewegbar, so ist eine vorteilhafte Konstruktion der Schutzvorrichtung nach Anspruch 10 zu erreichen. In diesem Falle ist das Kreissägeblatt in der Schwenkausgangsstellung des Sägeaggregates an seiner frei zugänglichen Stirnfläche im wesentlichen ganz abgedeckt, und die Haube kann derart ausgebildet sein, daß das Kreissägeblatt an seiner dem Sägeaggregat benachbarten Stirnfläche zumindest im Umfangsbereich bis zu seinem unteren Umfangsteil von der Haube völlig umgriffen wird, sodaß im Zusammenwirken mit dem am Sägeaggregat befestigten Teilstück der Schutzvorrichtung das Kreissägeblatt dann völlig verkapselt in der Schutzvorrichtung untergebracht ist.

Eine weitere vorteilhafte Konstruktionsvariante dieser Bauart besteht gemäß Anspruch 11 darin, das am Sägeaggregat befestigte Teilstück der Schutzvorrichtung so zu gestalten, daß es das Kreissägeblatt ebenfalls an dessen oberem Umfangsteil übergreift. Hierdurch ist eine besonders sichere Anordnung getroffen, die einen zuverlässigen Schutz bei Herausschlagen gerissener Sägeblätter schafft. Weitere Merkmale und Einzelheiten der Erfindung sind in der sich anschließenden Beschreibung von in der Zeichnung gezeigten Ausführungsbeispielen erfindungsgemäßer Schutzvorrichtungen und/oder in den Patentansprüchen erläutert. In der Zeichnung zeigen:

Figur 1 eine Seitenansicht eines ersten Ausführungsbeispiels einer Schutzvorrichtung für eine Kippkreissägemaschine, deren Kreissägeblatt bei seiner Schwenkbewegung in Richtung Werkstück entlang eines sich von oben nach unten erstreckenden Kreisbogenstückes bewegbar ist, wobei das Sägeaggregat in seiner oberen Schwenkausgangsstellung und die Schutzvorrichtung in ihrer geschlossenen Stellung gezeigt ist;

Figur 2 eine Seitenansicht der Schutzvorrichtung gemäß Figur 1, in einer Stellung ihrer Teilstücke während eines Sägevorganges;

Figur 3 eine Seitenansicht der Schutzvorrichtung in der unteren Schwenkendstellung des Sägeaggregates;

Figur 4 eine Seitenansicht der Schutzvorrichtung in der oberen Schwenkausgangsstellung des Sägeaggregates, wobei die Haube der Schutzvorrichtung in ihrer Freigabestellung hochgeschwenkt ist;

Figur 5 einen Querschnitt durch die Schutzvorrichtung entlang der Linie 5-5 der Figur 1, in größerem Maßstab als Figur 1;

Figur 6 eine Seitenansicht eines zweiten Ausführungsbeispieles einer Schutzvorrichtung für eine Kippkreissägemaschine, deren Sägeaggregat derart verschwenkbar ist, daß das Kreissägeblatt im wesentlichen von hinten her an die Werkstückspannvorrichtung der Kippkreissägemaschine herangeführt wird; die Schutzvorrichtung befindet sich hierbei in ihrer maximalen Abdeckstellung.

Figur 7 eine Darstellung der Schutzvorrichtung in der Schwenkendstellung des Sägeaggregates.

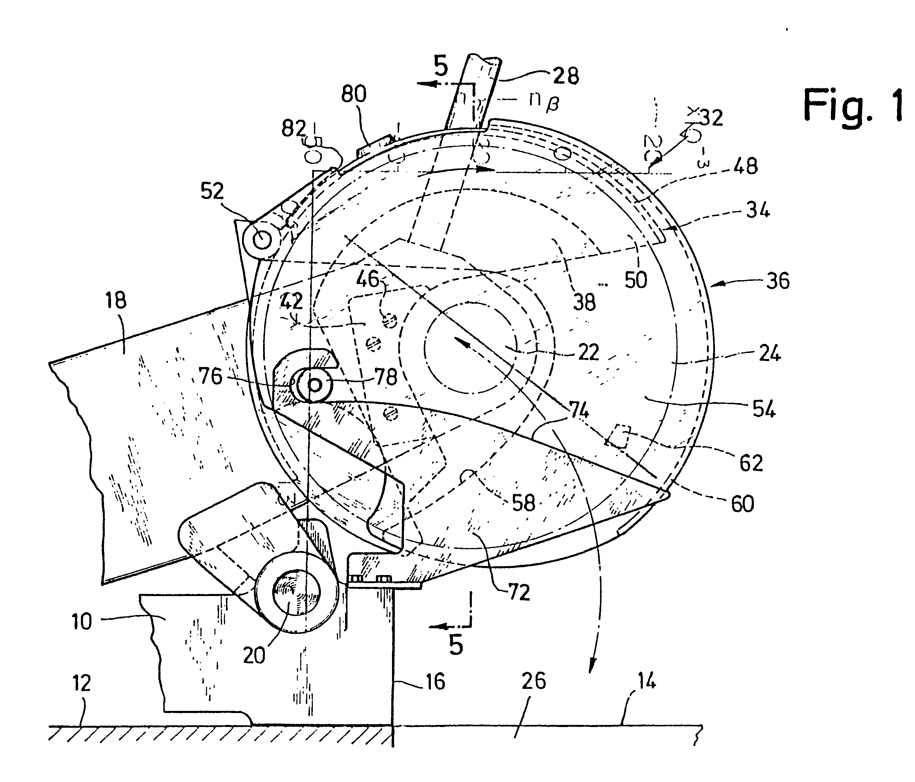

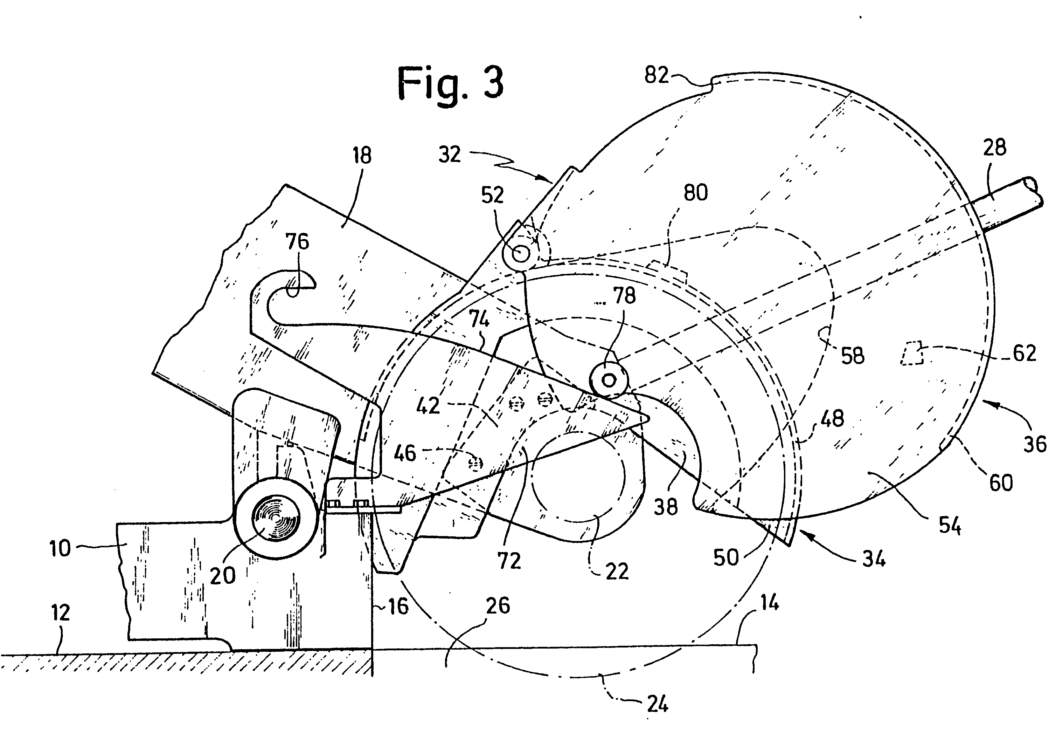

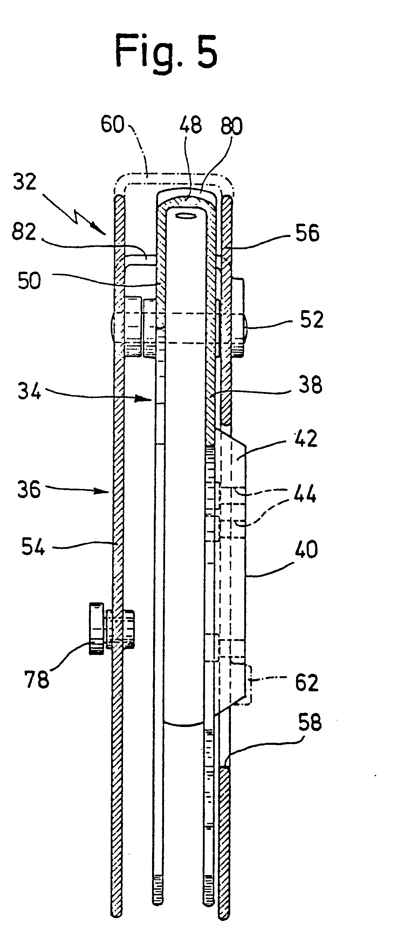

Bei der Konstruktion gemäß Figuren 1-5 ist der untere Gestellteil einer Kippkreissägemaschine mit 10 bezeichnet. Dieser sitzt auf einer Basisplatte 12, die eine Werkstückauflagefläche 14 aufweist. 16 bezeichnet eine Werkstückanschlagfläche, die oberhalb der Werkstückauflagefläche und zu dieser senkrecht angeordnet ist. Auf dem unteren Gestellteil 10 ist ein Schwenkarm 18 eines Sägeaggregates der Kippkreissägemaschine mittels einer Schwenkachse 20 zwischen einer in Figur 1 gezeigten Schwenkausgangsstellung und einer in Figur 3 gezeigten Schwenkendstellung verschwenkbar angeordnet. Am Vorderende dieses Schwenkarmes ist eine lediglich strichpunktiert angedeutete Sägewelle 22 achsparallel zur Schwenkachse 20 drehantreibbar gelagert, wobei deren Antriebsmittel im einzelnen nicht gezeigt sind.

Auf die Sägewelle ist ein ebenfalls strichpunktiert angedeutetes Kreissägeblatt 24 aufsteckbar und befestigbar. In der Ebene des Kreissägeblattes befindet sich in der Werkstückauflagefläche 14 ein Eintauchschlitz 26.

Der Schwenkarm 18 des Sägeaggregates ist mittels eines an diesem befestigten Handhebels 28 zwischen seinen beiden Schwenkendstellungen verschwenkbar. Als Hebelgriff weist dieser einen Kugelkopf 30 auf.

Dem Kreissägeblatt 24 ist eine am Schwenkarm 18 anzubauende Schutzvorrichtung 32 zugeordnet, die in der Schwenkausgangsstellung des Sägeblattes gemäß Figur 1 dasselbe zumindest im Bereiche seines Umfangs so umschließt bzw. einkapselt, daß ein in Berührungkommen mit seinen Sägezähnen nicht möglich ist.

Diese Schutzvorrichtung weist ein erstes Teilstück 34 und ein zweites Teilstück 36 auf. Das erste Teilstück ist an einem Seitenwandteil 38 mit einem eine ebene Anlagefläche 40 aufweisenden Befestigungssockel 42 ausgestattet, der von Schraubenbohrungen 44 durchdrungen ist. Mit Hilfe von Befestigungsschrauben 46 ist dieses erste Teilstück seitlich am Schwenkarm 18 des Sägeaggregates befestigt. Das erste Teilstück 34 weist einen das Kreissägeblatt teilweise am Umfang umfangenden Umfangswandteil 48 auf, dessen Stirnenden einen Abstand voneinander haben, der, bezogen auf die Achse der Sägewelle 22 einem Zentriwinkel α von ungefähr

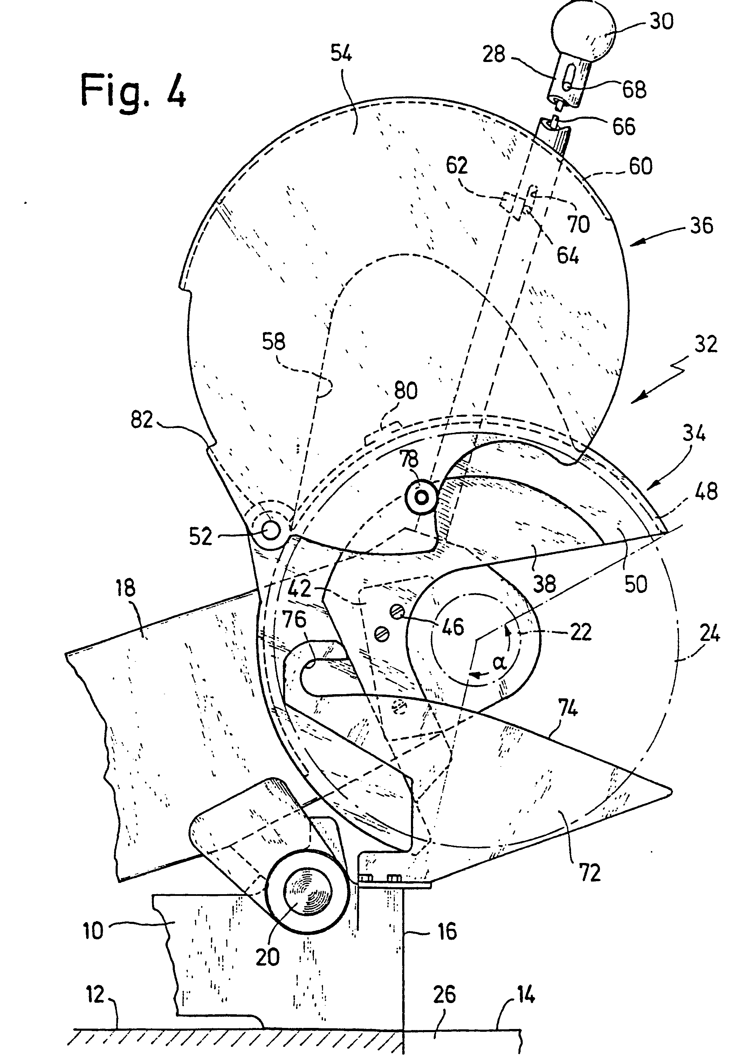

130° entspricht. Wie deutlich aus Figur 4 zu ersehen ist, ist die Anordnung des ersten Teilstückes 34 am Schwenkarm 18 derart getroffen, daß es sich, ausgehend von einem kurz oberhalb der Werkstückanschlagfläche 16 befindenden Umfangsbereich des Kreissägeblattes um das der Bedienungsseite gegenüberliegende Umfangsteilstück und um dessen oberes Umfangsteilstück herum bis in den Bereich des bedienungsseitig vorhandenen Umfangsteils des Kreissägeblattes erstreckt. Der an seiner dem Schwenkarm 18 benachbarten Seite vorhandene Seitenwandteil 38 des ersten Teilstückes 34 befindet sich hierbei in einem relativ geringen Radialabstand zur Sägewelle 22, während der an der zugänglichen Stirnfläche des Kreissägeblattes 24 vorhandene Seitenwandteil 50 eine relativ geringe Breite und zumindest im Bereich des oberen Umfangsteil des Kreissägeblattes Kreisbogenform aufweist. Das erste Teilstück 34 umfängt somit das Kreissägeblatt 24 über einen Umfangsbereich von ungefähr 230°.

Das zweite Teilstück 36 der Schutzvorrichtung bildet eine Haube, die auf einer am hinteren Umfangsteil des ersten Teilstückes 34 vorgesehenen Lagerachse 52 verschwenkbar angeordnet ist und welche das erste Teilstück 34 übergreift. Die Haube weist an der Seite der frei zugänglichen Stirnfläche des Kreissägeblattes eine im wesentlichen geschlossene Stirnwand 54 auf. Deren andere mit 56 bezeichnete Stirnwand ist mit einem Ausschnitt 58 ausgestattet, der notwendig ist, um die Haube in ihre Abdeckstellung einschwenken zu können, in welcher dieser Ausschnitt die Sägewelle 22 in sich aufnimmt. Die sich in Umfangsrichtung verbreiternde Form dieses Ausschnittes wird bestimmt durch den Radialabstand der Lagerachse 52 von der Sägewelle 22.

Mit 60 ist ein die beiden Stirnwände 54, 56 haltender Umfangswandteil der Haube bezeichnet, der, ausgehend von einem Bereich vor der Lagerachse 52, sich soweit erstreckt, daß in der maximalen Abdeckstellung der Haube gemäß Figur 1 sich dieser Umfangswandteil bis in den Bereich des unteren Umfangsteilstückes des Kreissägeblattes erstreckt. Dabei ist der Durchmesser dieser Haube um soviel größer als derjenige des Kreissägeblattes, daß sich dessen Sägezähne in einem Radialabstand vom Umfangswandteil 60 befinden und dadurch sichergestellt ist, daß man in der Schwenkanfangsstellung gemäß Figur 1 mit diesen nicht in Berührung kommen kann. In dieser Stellung nimmt die Haube praktisch das erste Teilstück 34 vollständig in sich auf. Die Position der Lagerachse 52 ist dabei so gewählt, daß sich die Haube 36 unter ihrem Schwergewicht selbsttätig in ihre Abdeckstellung bewegt, sobald sie in der in Figur 4 gezeigten Freigabestellung entriegelt wird. Zu diesem Zweck weist sie an deren Stirnwand 56 eine Anschlagnase 62 auf, der am Handhebel 28 ein Anschlagstift 64 zugeordnet ist. Letzterer ist über eine innerhalb des Handhebels vestellbar angeordnete Zugstange 66, die durch radiale Betätigungsstifte 68 axial verstellbar ist, aus seiner in Figur 4 gezeigten Anschlagstellung innerhalb eines Längsschlitzes 70 in eine die Anschlagnase 62 frei gebende Freigabestellung verstellbar, so daß die Haube selbsttätig in ihre Abdeckstellung zurückschwenkt.

Zum Auswechseln eines Kreissägeblattes ist die Haube in der in Figur 4 gezeigten Freigabestellung zu verriegeln, wonach das Kreissägeblatt von der Sägewelle 22 gelöst und innerhalb des ersten Teilstückes 34 der Schutzvorrichtung soweit axial verstellt werden kann, daß es von der Sägewelle freikommt. Danach kann es in der in dieser Figur angedeuteten Pfeilrichtung aus dem Vorrichtungsteilstück 34 entnommen und gegen ein anderes ersetzt werden.

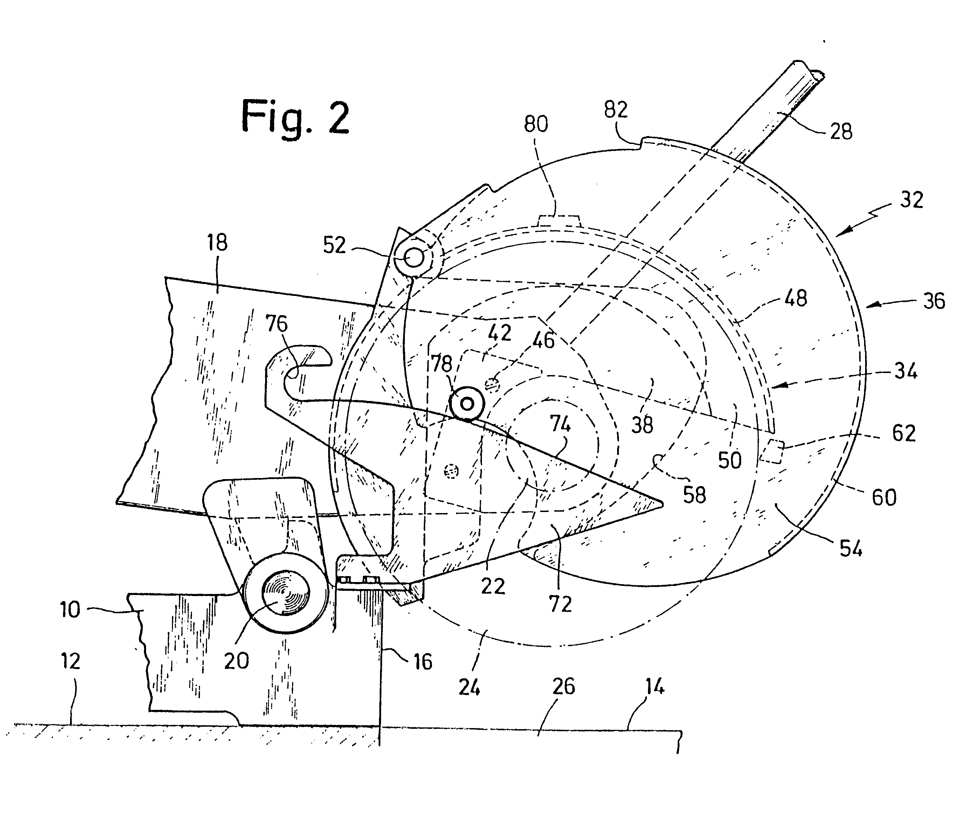

Dem die Haube bildenden zweiten Teilstück 36 ist eine Steuervorrichtung zugeordnet, mit deren Hilfe die Haube bei der Durchführung des Sägevorschubes relativ zum ersten Teilstück 34 derart verschwenkt wird, daß sie in jeder Phase des Vorschubes, bezogen auf die Werkstückauflagefläche 14, ungefähr die gleiche Lage im Raum beibehält, wie dies aus den Figuren 2 und 3 ersichtlich ist. Zu diesem Zweck ist seitlich der Stirnwand 54 der Haube am unteren Gestellteil 10 ein Kurventräger 72 vorgesehen, der sich ungefähr parallel zur Stirnwand 54 erstreckt. Dessen obere Längskante bildet eine Steuerkurve 74, die am Hinterende des Kurventrägers in eine Ausnehmung 76 einmündet. An der Stirnwand 54 der Haube ist eine Kurvenrolle 78 gelagert, die in der maximalen Abdeckstellung der Haube in die Ausnehmung 76 des Kurventrägers 72 eingreift und dadurch sicherstellt, daß die Haube in der Schwenkausgangsstellung des Sägeaggregates (Figur 1) in ihrer maximalen Abdeckstellung zwangsläufig verriegelt ist.

Bei Verschwenken des Sägeaggregates zur Durchführung des Sägevorschubes bewegt sich die Kurvenrolle 78 entlang der Steuerkurve 74 und bewirkt dadurch die oben erläuterte Relativbewegung der Haube zum ersten Teilstück 34 der Schutzvorrichtung.

Am Umfangswandteil 48 des ersten Teilstückes 34 ist ein Schlauchanschluß 80 vorgesehen, der in der maximalen Abdeckstellung der Haube gemäß Figur 1 eine längliche Ausnehmung 82 des Umfangswandteiles 60 der Haube durchgreift. An diesen Schlauchanschluß kann mittels eines durch den Umfangswandteil 60 der Haube hindurchzuführenden Zuführschlauches Kühl- und/oder Schmierflüssigkeit dem Kreissägeblatt zugeführt werden.

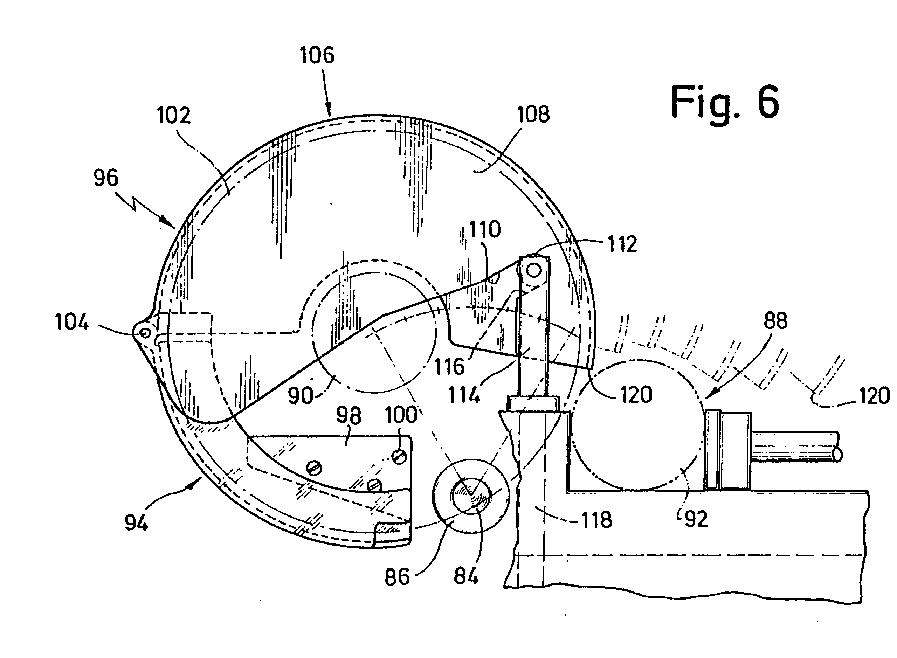

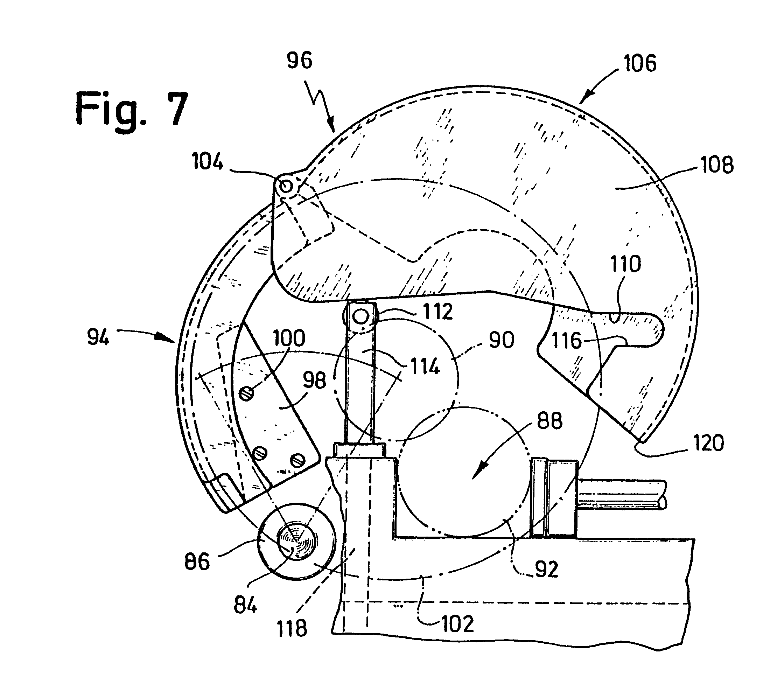

Das in den Figuren 6 und 7 gezeigte Ausführungsbeispiel einer Schutzvorrichtung ist für Kippkreissägen konzipiert, deren Sägeaggregat bei Verschwenken in Vorschubrichtung im wesentlichen von hinten her an die Werkstückspannvorrichtung herangeführt wird.

Dabei ist vom Sägeaggregat lediglich dessen auf einer Schwenkachse 84 sitzende Nabe 86 gezeigt. Die Schwenkachse liegt hinter einer als Ganzes mit 88 bezeichneten Werkstückspannvorrichtung.

Die Sägewelle ist strichpunktiert angedeutet und mit 90 bezeichnet. 92 bezeichnet ein strichpunktiert angedeutetes eingespanntes Werkstück. Analog zur vorbeschriebenen Ausführungsform ist auch bei dieser Konstruktion ein erstes mit 94 bezeichnetes Teilstück der Schutzvorrichtung 96 mittels eines Befestigungssockels 98 und Befestigungsschrauben 100 am Sägeaggregat befestigt. Dieseserste Teilstück hat im wesentlichen die Form eines 90°-Bogens und erstreckt sich in der Schwenkausgangsstellung des Sägeaggregates gemäß Figur 6 vom unteren Umfangsteil eines strichpunktiert angedeuteten Kreissägeblattes 102 entlang seines hinteren Umfangteils nach oben. Am oberen Ende des ersten Teilstückes sitzt auf einer an diesem befestigten Lagerachse 104 das eine Haube bildende zweite Teilstück 106 der Schutzvorrichtung, welche das Kreissägeblatt von oben her übergreift und ungefähr zur Hälfte am Umfang und an den Stirnflächen abdeckt. Demgemäß endet die Haube in der Schwenkausgangsstellung des Sägeaggregates kurz oberhalb der Werkstückspannvorrichtung 88, während der der Bedienungsseite zugekehrte Umfangsteil des Kreissägeblattes sich hinter der Spannvorrichtung befindet. Damit ist ein hinter der Werkstückspannvorrichtung vorhandener Sektor des Kreissägeblattes, der vorzugsweise kleiner ist als 90°, sowohl am Umfang als auch seitlich nicht abgedeckt. Dies ist aber auch nicht notwendig, weil sowohl von der Bedienungsseite aus als auch von der Stirnseite her das Kreissägeblatt an der Maschine in dieser Stellung des Sägeaggregates nicht zugänglich ist.

Bei dieser Konstruktion wirken die Steuermittel zur Verschwenkung des die Haube bildenden zweiten Teilstückes 106 relativ zum ersten Teilstück 104 kinematisch umgekehrt, in dem die Längskante der einen Stirnwand 108 der Haube eine Steuerkurve 110 bildet, während eine mit dieser zusammenwirkenden Kurvenrolle 112 an einem stationären Halter 114 gelagert ist. Das eine Ende der Steuerkurve 110 befindet sich innerhalb einer Ausnehmung 116, in welche die Kurvenrolle 112 in der Schwenkausgangsstellung des Sägeaggregates einläuft und dadurch die Haube in ihrer Abdeckstellung sichert.

Sofern die Werkstückspannvorrichtung zur Durchführung von Gehrungsschnitten relativ zum Kreissägeblatt senkrecht zur Zeichenebene verschwenkbar und feststellbar ist, kann der Halter 114 mit einem Schaftteil 118 zugleich die Schwenkachse der Werkstückspannvorrichtung bilden.

In Figur 6 sind strichpunktiert diverse Stellungen der Haube angedeutet, die sie relativ zur Werkstückspannvorrichtung bei der Durchführung eines Sägeschnittes einnimmt, wobei klar ersichtlich ist, daß in jeder Phase des Sägevorschubes bedienungsseitig eine wirksame Abdeckung des Kreissägeblattes gewährleistet ist. Hierbei ist die Steuerkurve 110 derart ausgelegt, daß umfangsseitig die vordere untere Kante 120 der Haube sich in einer Ebene befindet, die zur Werkstückauflagefläche der Spannvorrichtung einen kleineren Abstand hat als der Durchmesser des zu durchtrennenden Werkstückes 92.

**Ansprüche**

1. Schutzvorrichtung für das Kreissägeblatt (24, 102) von Kippkreissägemaschinen, deren eine horizontal gelagerte Sägewelle (22, 90) aufweisendes Sägeaggregat zur Durchführung des Vorschubes insbesondere mittels eines Handhebels (28) um eine horizontale Schwenkachse (20, 84) des Maschinengestells verschwenkbar angeordnet ist, um das Sägeaggregat in Richtung auf eine Werkstückauflagefläche (14) zu schwenken, mit zwei Teilstücken (34, 36), die in der oberen Ausgangsstellung des Sägeaggregates gemeinsam das Kreissägeblatt (24) von oben her, an seiner frei zugänglichen Stirnfläche und mindestens an dessen an der Bedienungsseite vorhandenem Umfangsteil abdecken und von denen das eine Teilstück (34) am Sägeaggregat fest und das andere Teilstück (36) relativ zum letzteren verstellbar angeordnet ist, dadurch gekennzeichnet, daß das am Sägeaggregat fest angeordnete Teilstück (34 ; 94) das Kreissägeblatt (24 ; 102) mindestens von hinten her und sich im wesentlichen bis zu dessen unterem Umfangsbereich erstreckend, umgreift, daß das verstellbare Teilstück (36 ; 106) eine das Kreissägeblatt (24 ; 102) übergreifende Haube bildet, die in der Schwenkausgangsstellung des Sägeaggregates das Kreissägeblatt an dessen oberem sowie an dessen an der Bedienungsseite der Maschine vorhandenen Umfangsteil zumindest bis in die Nähe seines unteren Umfangsteils bzw. der Schnittstelle umfängt und daß eine Steuervorrichtung vorgesehen ist, durch die die Haube bei Verschwenken des Sägeaggregates relativ zu dem am letzteren befestigten Teilstück (34 ; 94) der Schutzvorrichtung (32 ; 96) derart verstellbar ist, daß sie sich bei der Schwenkbewegung des Sägeaggregates im wesentlichen parallel zur Werkstückauflagefläche (14) bewegt.

2. Schutzvorrichtung nach Anspruch 1, dadurch gekennzeichnet, daß das die Haube bildende zweite Teilstück (36 ; 106) zumindest in der Schwenkausgangsstellung des Sägeaggregates zur Verhinderung einer Relativbewegung zum anderen Teilstück (34 ; 94) selbsttätig verriegelt ist.

3. Schutzvorrichtung nach Anspruch 2, dadurch gekennzeichnet, daß das die Haube bildende zweite Teilstück (36 ; 106) in der Schwenkausgangsstellung des Sägeaggregates durch die Steuervorrichtung verriegelbar ist.

4. Schutzvorrichtung nach einem der vorhergehenden Ansprüche, dadurch gekennzeichnet, daß die Steuervorrichtung eine mit einem Abtastglied, insbesondere Kurvenrolle (78 ; 112) zusammenwirkende Steuerkurve (74 ; 110) aufweist, wobei entweder die letztere oder das Abtastglied an einem stationären Teil des Maschinengestells und der andere Teil der Steuervorrichtung an dem die Haube bildenden zweiten Teilstück (36 ; 106) angeordnet ist.

5. Schutzvorrichtung nach Anspruch 4, dadurch gekennzeichnet, daß zum Verriegeln der Haube das Abtastglied der Steuervorrichtung in der Schwenkausgangsstellung des Sägeaggregates in eine Ausnehmung (76 ; 116) der Steuerkurve (74 ; 110) eingreift.

6. Schutzvorrichtung nach einem der vorhergehenden Ansprüche dadurch gekennzeichnet, daß die Haube (36 ; 106) insbesondere nach hinten und oben in eine Freigabestellung verschwenkbar und in dieser feststellbar ist und daß sie bei Verschwenken des Sägeaggregates in Vorschubrichtung selbsttätig in ihre Abdeckstellung zurückkehrt.

7. Schutzvorrichtung nach Anspruch 6, dadurch gekennzeichnet, daß die Haube (36) mittels eines am Handhebel (28) aus einer Anschlagstellung in eine Freigabestellung verstellbar angeordneten Anschlaggliedes (64) in ihrer Freigabestellung feststellbar ist, welches Anschlagglied (64) bei Verschwenken des Sägeaggregates die Haube zwangsläufig frei gibt.

8. Schutzvorrichtung nach Anspruch 6 oder 7, dadurch gekennzeichnet, daß die Lagerachse (52 ; 104) der Haube (36 ; 106) an dem am Sägeaggregat befestigten ersten Teilstück (34 ; 94) der Schutzvorrichtung (32 ; 96) angeordnet ist und die Haube letzteres mindestens teilweise in sich aufnimmt.

9. Schutzvorrichtung nach einem der vorhergehenden Ansprüche, wobei das Sägeaggregat der Kippkreissägemaschine am Maschinengestell derart verschwenkbar ist, daß das Kreissägeblatt (102) bei seiner Bewegung zwischen beiden Schwenkendstellungen an eine Werkstückspannvorrichtung (88) im wesentlichen von hinten her herangeführt wird, dadurch gekennzeichnet, daß das am Sägeaggregat angeordnete, das Kreissägeblatt (102) von hinten her umgreifende Teilstück der Schutzvorrichtung (96) sich in der Schwenkanfangsstellung des Sägeaggregates mindestens bis zum untersten Umfangsteil des Kreissägeblattes (102) erstreckt und daß die Haube (106) in dieser Stellung des Sägeaggregates bedienungsseitig kurz oberhalb der Werkstückspannvorrichtung (88) endet.

10. Schutzvorrichtung nach einem der vorhergehenden Ansprüche 1 bis 8, wobei das Kreissägeblatt bei seiner Schwenkbewegung in Richtung Werkstück entlang eines sich von oben nach unten erstreckenden Kreisbogenstückes bewegbar ist, dadurch gekennzeichnet, daß die Haube (36) das am Sägeaggregat befestigte Teilstück (34) der Schutzvorrichtung (32) übergreift und in der oberen Schwenkausgangsstellung des Sägeaggregates das Kreissägeblatt (24) an seiner frei zugänglichen Stirnfläche im wesentlichen ganz abdeckt.

11. Schutzvorrichtung nach Anspruch 10, dadurch gekennzeichnet, daß deren am Sägeaggregat befestigtes Teilstück (34) das Kreissägeblatt (24) gleichfalls an dessen oberem Umfangsteil übergreift, daß an dessen oberem Teil ein Anschluß (80) für eine Kühl- und/oder Schmierflüssigkeit fördernde Zuführleitung angeordnet ist und daß die Haube (36) im Bereich dieses Anschlusses (80) für die Zuführung der Zuführleitung an ihrem oberen Umfangsteil einen länglichen Durchbruch (82) aufweist.

12. Schutzvorrichtung nach Anspruch 11, dadurch gekennzeichnet, daß beide Teilstücke (34, 36) der Schutzvorrichtung (32) zusammen in der oberen Schwenkausgangsstellung des Sägeaggregates die diesem benachbarte Stirnfläche des Kreissägeblattes (24) zumindest im Umfangsbereich vollständig abdecken.

## Claims

1. Protective device for the circular saw blade (24, 102) of tilting circular saw machines whose sawing unit, which comprises a horizontally mounted saw shaft (22, 90), is disposed so as to pivot about a horizontal swivel axis (20, 84) of the machine frame in order to perform the feed, in particular by means of a hand lever (28), and in order to pivot the sawing unit in the direction towards a workpiece deposit surface (14), with two parts (34, 36) which jointly cover the circular saw blade (24) from above in the upper starting position of the sawing unit at the freely accessible front surface of the circular saw blade (24) and at least at the peripheral section thereof at the operating side and of which parts (34, 36) one (34) is disposed rigidly on the sawing unit and the other part (36) is disposed such that it may be adjusted with respect to the latter, characterized in that the part (34, 94), which is rigidly disposed at the sawing unit, embraces the circular saw blade (24 ; 102) at least from the rear and substantially extends to the lower peripheral area of the circular saw blade (24 ; 102) ; in that the adjustable part (36 ; 106) forms a hood which engages over the circular saw blade (24 ; 102) and, in the pivot starting position of the sawing unit, surrounds the circular saw blade at its upper as well as its lower peripheral part at the operating side of the machine at least as far as the vicinity of its lower peripheral part or the cutting point ; and in that a control device is provided by means of which the hood is adjustable relative to the part (34, 94) of the protective device (32 ; 96) — when the sawing unit — to which the part (34 ; 94) is secured- is pivoted, in such a way that it moves essentially parallel to the workpiece deposit surface (14) during the pivoting movement of the sawing unit.

2. Protective device as claimed in claim 1, characterized in that the second part (36 ; 106), which forms the hood, is automatically locked at least in the pivot starting position of the sawing unit in order to prevent a relative movement with respect to the other part (34 ; 94).

3. Protective device as claimed in claim 2, characterized in that the second part (36 ; 106), which forms the hood, may be locked by the control device in the pivot starting position of the sawing unit.

4. Protective device as claimed in one of the preceding claims, characterized in that the control device comprises a cam (74 ; 110) which cooperates with a sensing member, in particular a cam roller (78 ; 112), wherein either the cam (74 ; 110) or the sensing member is disposed at a stationary part of the machine frame and the other part of the control device is disposed at the second part (36 ; 106) which forms the hood.

5. Protective device as claimed in claim 4, characterized in that the sensing member of the control device engages in a recess (76 ; 116) of the cam (74 ; 110) in the pivot starting position of the sawing unit in order to lock the hood.

6. Protective device as claimed in one of the preceding claims, characterized in that the hood (36 ; 106) may be pivoted backwards and upwards into a releasing position and may be secured therein and in that it automatically returns to its covering position when the sawing unit is pivoted in the feed direction.

7. Protective device as claimed in claim 6, characterized in that the hood (36) may be secured in its releasing position by means of a stop member (64) which is disposed on the hand lever (28) so as to be displaced from a stop position into a releasing position and automatically releases the hood when the sawing unit is pivoted.

8. Protective device as claimed in claim 6 or 7, characterized in that the bearing axis (52 ; 104) of the hood (36 ; 106) is disposed at the first part (34 ; 94), of the protective device (32 ; 96), secured to the sawing unit and the hood accommodates the first part (34 ; 94) at least partially in itself.

9. Protective device as claimed in one of the preceding claims, wherein the sawing unit of the tilting circular saw machine is pivotable on the machine frame in such a way that the circular saw blade is led up essentially from the rear, during its movement between the two pivot end positions, to a workpiece clamping device, characterized in that the part of the protective device (96), which embraces the circular saw blade (102) from the rear and is arranged on the sawing unit, extends in the pivot starting point of the sawing unit at least as far as the lowermost peripheral section of the circular saw blade (102) and in that the hood (106) ends shortly above the workpiece clamping device (88) on the operating side in this position of the sawing unit.

10. Protective device as claimed in one of the preceding claims 1 to 8, wherein the circular saw blade is movable along a circular arc section, which extends from the top to the bottom, when the circular saw blade pivots in the direction towards the workpiece, characterized in that the hood (36) engages over the part (34), of the protective device (32), which is secured to the sawing unit and covers the circular saw blade (24) substantially completely at the freely accessible front surface thereof, in the upper pivot starting position of the sawing unit.

11. Protective device as claimed in claim 10, characterized in that the part (34) thereof secured to the sawing unit likewise engages over the circular saw blade (24) at the upper peripheral section thereof ; in that at the upper part of the circular saw blade (24) there is disposed a connection (80) for a supply line delivering cooling and/or lubricating fluid ; and in that the hood (36) comprises an elongated perforation (82) at its upper peripheral section and in the region of this connection (80) for the inlet of the supply line.

12. Protective device as claimed in claim 11, characterized in that the two parts (34, 36) of the protective device (32) together cover completely the front surface, of the circular saw blade (24), adjacent the sawing unit, at least in the peripheral area, in the upper pivot starting position of the sawing unit.

**Revendications**

1. Dispositif de protection pour la lame circulaire (24, 102) de machines à scie circulaire basculantes dans lesquelles l'appareil de sciage comportant un arbre de scie (22, 90) monté horizontalement peut basculer autour d'un axe de basculement horizontal (20, 84) du bâti de la machine, en particulier au moyen d'un levier (28), pour effectuer l'avance, afin de faire basculer l'appareil de sciage vers une surface (14) d'appui de la pièce à scier, ce dispositif comprenant deux éléments (34, 36) qui, dans la position supérieure de départ de l'appareil de sciage, recouvrent ensemble la lame circulaire (24) par le dessus, sur sa face librement accessible et au moins sur la partie de sa périphérie se trouvant du côté du travail, le premier (34) de ces deux éléments étant fixé à l'appareil de sciage et l'autre élément (36) étant déplaçable par rapport à ce dernier, caractérisé en ce que l'élément (34 ; 94) fixé à l'appareil de sciage entoure la lame circulaire (24 ; 102) au moins depuis l'arrière et en s'étendant à peu près jusqu'à sa région périphérique inférieure, en ce que l'élément déplaçable (36 ; 106) forme un capot recouvrant la lame circulaire (24 ; 102) et qui, dans la position de départ de l'appareil de sciage, entoure la lame circulaire à sa partie périphérique supérieure ainsi qu'à sa partie périphérique située du côté du travail de la machine, au moins jusqu'au voisinage de sa partie périphérique inférieure ou de l'emplacement de coupe, et en ce qu'il est prévu un dispositif de commande au moyen duquel le capot, lors du basculement de l'appareil de sciage, peut être déplacé par rapport à l'élément (34 ; 94) du dispositif de protection (32 ; 96) fixé à cet appareil de façon telle qu'il se déplace à peu près parallèlement à la surface (14) d'appui de la pièce lors du mouvement de basculement de l'appareil de sciage.

2. Dispositif de protection suivant la revendication 1, caractérisé en ce que le deuxième élément (36 ; 106) formant le capot est automatiquement verrouillé, au moins dans la position de départ de l'appareil de sciage, pour empêcher tout mouvement relatif par rapport à l'autre élément (34 ; 94).

3. Dispositif de protection suivant la revendication 2, caractérisé en ce que le deuxième élément (36 ; 106) formant le capot peut être verrouillé dans la position de départ de l'appareil de sciage par le dispositif de commande.

4. Dispositif de protection suivant l'une des revendications précédentes, caractérisé en ce que le dispositif de commande comprend une came de commande (74 ; 110) coopérant avec un organe palpeur, en particulier avec un galet de came (78 ; 112), la came ou l'organe palpeur étant monté sur une partie stationnaire du bâti de la machine et l'autre élément du dispositif de commande étant monté sur le deuxième élément (36 ; 106) formant le capot.

5. Dispositif de protection suivant la revendication 4, caractérisé en ce que, pour verrouiller le capot, l'organe palpeur du dispositif de commande pénètre dans un évidement (76 ; 116) de la came de commande (74 ; 110) dans la position de départ de l'appareil de sciage.

6. Dispositif de protection suivant l'une des revendications précédentes, caractérisé en ce que le capot (36 ; 106) peut être basculé, en particulier vers l'arrière et vers le haut, jusque dans une position de libération, et peut être fixé dans cette position, et en ce que, lors du basculement de l'appareil de sciage dans le sens de l'avance, il revient automatiquement dans sa position de recouvrement.

7. Dispositif de protection suivant la revendication 6, caractérisé en ce que le capot (36) peut être fixé dans sa position de libération au moyen d'un organe de butée (64) monté mobile sur le levier (28) entre une position de butée et une position de libération, cet organe de butée (64) libérant positivement le capot lors du basculement de l'appareil de sciage.

8. Dispositif de protection suivant l'une des revendications 6 et 7, caractérisé en ce que l'axe d'articulation (52 ; 104) du capot (36 ; 106) est disposé sur le premier élément (34 ; 94) du dispositif de protection (32 ; 96) fixé à l'appareil de sciage, le capot recevant au moins partiellement ce premier élément.

9. Dispositif de protection suivant l'une des revendications précédentes, dans lequel l'appareil de sciage de la machine à scie circulaire basculante est monté basculant sur le bâti de la machine de façon que la lame circulaire, dans son mouvement entre les deux positions extrêmes de basculement, soit guidée vers un étau essentiellement par l'arrière, caractérisé en ce que l'élément du dispositif de protection (96) monté sur l'appareil de sciage et entourant la lame circulaire (102) par l'arrière s'étend, dans la position de départ de l'appareil de sciage, au moins jusqu'à la région périphérique la plus inférieure de la lame circulaire (102), et en ce que le capot, dans cette position de l'appareil de sciage, se termine, du côté du travail, légèrement au-dessus de l'étau (88).

10. Dispositif de protection suivant l'une des revendications précédentes 1 à 8, dans lequel la lame circulaire, dans son mouvement de basculement vers la pièce, se déplace le long d'un arc de cercle s'étendant du haut vers le bas, caractérisé en ce que le capot (36) recouvre l'élément (34) du dispositif de protection (32) fixé à l'appareil de sciage et, dans la position supérieure de départ de l'appareil de sciage, recouvre à peu près la totalité de la face librement accessible de la lame circulaire (24).

11. Dispositif de protection suivant la revendication 10, caractérisé en ce que son élément (34) fixé à l'appareil de sciage recouvre également la lame circulaire (24) dans sa région périphérique supérieure, en ce qu'un raccord (80) pour une conduite d'amenée d'un liquide de refroidissement et/ou de lubrification est disposé à la partie supérieure de cet élément, et en ce que le capot (36), dans la région de ce raccord (80), présente une lumière (82) de forme allongée dans sa région périphérique supérieure pour le passage de la conduite d'amenée.

12. Dispositif de protection suivant la revendication 11, caractérisé en ce que les deux éléments (34, 36) du dispositif de protection (32), dans la position supérieure de départ de l'appareil de sciage, recouvrent complètement la face de la lame circulaire (24) voisine de cet appareil, au moins dans la région périphérique.

Fig. 1

0 012 854

# Fig. 2

Fig. 3

0 012 854

Fig. 4

# Fig. 5

Fig. 6

0 012 854

# Fig. 7

0 012 854